# EUROPEAN PATENT APPLICATION

(11) **EP 4 703 072 A1**
(43) Date of publication of application: **04.03.2026**
(21) Application number: 24196684.5
(22) Date of filing: 27.08.2024
(51) Int. Cl.: B23B 29/24

(54) **TOOL TURRET WITH AXIAL MOTOR**

(71) Applicant: DMG MORI Tortona S.r.l., 15057 Tortona (IT)
(72) Inventor: ALLEGRONE, Lorenzo, 15057 Tortona (IT); FERRARI, Fabrizio, 15045 Sale (IT)
(74) Representative: MERH-IP Matias Erny Reichl Hoffmann Patentanwälte PartG mbB

(57) **Abstract**

Turret unit for a machine tool, in particular a universal turning machine or a lathe, the turret unit comprising: a turret body mounted to a tool carrier of the machine tool; a turret head mounted to the turret body and including a turret disk, wherein the turret disk is configured to be rotatable around a disk axis and has a plurality of slots for receiving tools; and a first driving means attached to the turret head or the turret body; wherein a tool rotation axis of a tool received in a slot of the plurality of slots is substantially parallel to the disk axis; and wherein the first driving means is configured to couple to the tool received in the slot of the turret disk.

## Description

The present invention relates to a method and turret unit for a universal turning machine or lathe including a driving means for driving mounted tools.

Tool turrets are critical components in machine tools, enabling the use of multiple tools in a single setup. Traditional designs often involve complex shaft and gearing systems to drive the tools, which can be space-consuming, costly, and require significant maintenance.

The present invention pertains to advancements in tool turrets, with a particular focus on the innovative design and functionality of directly driving tools extending from the tool disk of the tool turret, preferably in axial direction. This invention addresses the need for a more compact, efficient, and reliable tool turret system, especially in the context of machine tools. Specifically, the present invention seeks to overcome these limitations by introducing a tool turret with an external drive motor attached to the turret body or turret head allowing for the direct driving of axial tools.

For example, PTL 1 (US 2004 103510 A1) describes a tool turret with a housing that can be connected to a machine tool, incorporating an electric drive motor and a rotatable tool disk. The tool disk is designed to be fixed in selectable angular positions and includes recesses for machining tools. An aspect of this system is the integration of the electric drive motor inside the tool disk.

The system of PTL 1 leverages planetary gear units for speed reduction, ensuring that the high speeds generated by the electric motor can be appropriately reduced for optimal machining performance. Additionally, a coupling device is included to facilitate the engagement and disengagement of the drive shaft of the machining tool.

However, the system of PTL 1 describes a specific configuration of the motor and placement of the motor within the turret disk which only enables the possibility of direct drive for the radial tools installed in the slots of the tool turrets extending in the radial direction. However, there is no configurations of the enabling the effective drive of the tools in an axial slot. Moreover, there is a need for improving the efficiency of the drive system.

As a result, there is a need to optimize the structure of the tool turret in order to enable more efficient utilization of the tools of the turret disk. Specifically, the improvement can be related to improving the efficiency of a turret disk coupled to the motor.

The above cited problem is solved in accordance with the features of the independent claims. Dependent claims concern further preferrable developments.

Specially, by a configuration of a turret unit for a machine tool, in particular a universal turning machine or a lathe, the turret unit may comprise, a turret body configured to be mounted to a tool carrier of the machine tool. Moreover, the turret unit may comprise a turret head mounted to the turret body and including a turret disk, wherein the turret disk may be configured to be rotatable around a disk axis and may have a plurality of slots for receiving tools. Moreover, a first driving means may be provided to be attached to the turret head or the turret body, wherein a tool rotation axis of a tool received in a slot of the plurality of slots may be substantially parallel to the disk axis. The first driving means may be configured to couple to the tool received in the slot of the turret disk.

The advantages of the system according to the present invention are that by providing the first driving means which may be a motor, or even external motor, coupled to the turret head or the turret body, it is possible to provide system in which the tools may be coupled with the first driving means or motor, preferably external motor, and may be driven with less gearing required between the tool and the motor or even provide the connection without a need for gearing at all. In other words, it may enable the direct coupling between the tool and the motor. In addition, the configuration described above has an advantage of providing a high torque output to the tool, which is helpful for rotating the tool disk and handling heavy or large tools. This ensures robust performance even for demanding machining conditions.

In addition, the advantage of the first driving means motor in such a configuration is that it is easier to provide maintenance and or repairs, because the service may be provided without a need to disassembling the entire turret unit as in cases with internal motors.

In the further part of the application, the term the first driving means can be understood as the motor or external motor. These terms can be used interchangeably. In addition, the coupling or connection between the motor and the tool is implies that the motor is connected directly to the tool or the motor is connected directly to the tool holder which holds the tool.

Another aspect of the present invention is that the first driving means may be configured to be connected directly to a received tool or tool holder, to provide a direct connection without a gear transmission in-between. The direct connection may refer to a mechanical configuration where the first driving means (such as a motor) may be directly connected to the driven component (such as the tool or the tool holder) without the use of intermediate gears or other transmission mechanisms. This direct connection may allow the power generated by the motor to be transmitted straight to the tool, ensuring a more efficient and straightforward transfer of energy. In other words, the system may have the first driving means which is coupled directly to the received tool or tool holder, to provide a direct transmission, preferably without a gear.

Consequently, the gearing connection between the motor and the tool may be leveraged or omitted. As a result, by eliminating intermediate gears, these systems may reduce mechanical complexity and potential points of failure, leading to increased reliability and easier maintenance. They also may achieve higher efficiency by minimizing energy losses associated with gear friction, allowing more of the motor's power to be directly transmitted to the tool. Additionally, direct drive systems may provide precise and responsive speed control.

Furthermore, the configuration of the motor with direct coupling to the tools may eliminate the need for intermediate gears or belts, reducing the overall footprint of the system. As a result, the configuration may allow more space saving, which may allow for more flexible turret unit layouts and configurations without impairing other parts of the system.

Another advantage of the present invention, the absence of gears may further reduce the noise and vibration levels during operation which can be advantageous in environments where noise reduction is critical or during precise machining operations.

Another aspect of the present invention is that a second driving means may be configured to rotate the turret disk around the disk axis. The second driving means may be attached to a base of the turret head or the turret body and the rotation axis of the second driving means may be preferably parallel and/or spaced apart from the disk axis.

The second driving means may directly attach to the base of the turret head or the turret body. This direct attachment may allow for efficient transfer of rotational force to the turret disk. The second driving means includes a gear which is configured to be rotated by the second driving means, as a second motor or a second external motor.

The second driving means may be configured to rotate the turret disk around a specific axis, referred to as the disk axis. The second driving means may extend away from the turret disk along its rotating axis. This positioning may allow for efficient transfer of rotational force to the turret disk. The second driving means may be integrated into the turret head design in a way that doesn't extend beyond the axial length of other components, contributing to a compact overall design while still providing the necessary rotational force. By rotating the turret disk, the second driving means may allow the positioning of different tools mounted on the turret disk into the desired operating positions for machining operation. Afterwards, the next tool or new tool may be coupled to the first driving means.

When the second driving means is activated, it drives the gear. The gear part may engage with a central gear of the turret disk. This engagement may allow the rotational force to be transferred from the gear to the central gear. The central gear may be directly connected to the turret disk. As the central gear rotates, it causes the turret disk to rotate around the disk axis.

Optionally, the second driving means may further comprise a reducer which is an intermediary component placed between the motor and the outer gear. It typically consists of series of gears that may reduce the speed of the motor while increasing the torque.

Another aspect of the present invention is that a control system may be configured to manage an engagement and disengagement of the first driving means with the tool, when the first driving means is in disengaged state with the tool the second motor may rotate the turret disk to align next tool with the first driving means, and/or the first motor may engage for driving the next tool for subsequent machining operation.

Another aspect of the present invention is that the first driving means may be configured to rotate the turret disk and to rotate the tool received the slot. In this configuration of the system, the first driving means may be designed to perform two critical functions: rotating the tool for machining operations and rotating the turret disk to position different tools. This dual functionality may be achieved through a predefined motor configuration and control system that may switch between these two modes of operation seamlessly.

The motor may be integrated with an advanced control system that can switch between the two modes of operation-rotating the tool and rotating the turret disk. A gear coupling mechanism may be used to switch the motor's function from rotating the tool to rotating the turret disk. This involves engaging and disengaging gears that connect the motor to the turret disk.

When the motor is set to rotate the tool, the coupling mechanism may engage the motor's shaft directly with the tool inserted in the axial slot. The tool may be securely clamped in the slot using a clamping means. The motor may drive the tool to perform various machining operations such as milling, drilling, or tapping.

Once the machining operation is complete, the control system may disengage the coupling mechanism that connects the motor to the tool. The control system may engage the gear coupling mechanism that may connect the motor to the turret disk. This may involve shifting gears to align the motor's output shaft with the turret disk's rotational axis. With the gear coupling engaged, the motor may drive the rotation of the turret disk. The disk may rotate smoothly on its bearing system, positioning the next tool in line with the motor's output shaft. Once the turret disk may be in a correct position, the control system may disengage the gear coupling and may re-engage the direct connection between the motor and the new tool. The new tool may be securely clamped in the axial slot, ready for the next machining operation.

The advantage of the system is an ability to switch between rotating the tool and the turret disk with a single motor enhances the system's versatility, allowing it to perform a wide range of machining operations. The integrated control system may allow for quick switching between tool rotation and turret disk rotation, reducing setup time and increasing overall efficiency.

Another aspect of the present invention, the first driving means may be configured to directly couple to a received tool having a tool axis of rotation which is substantially parallel to the disk axis. A driven shaft of the first driving means may be aligned directly with the drive shaft of the received tool. Alternatively, the rotation axis of the first driving means may be substantially parallel to the disk axis.

The tool axis of the received tool may be the axis of a rotation of the tool and may be parallel and/or displaced from the rotation axis of the turret disk, which is also called the disk axis in the present application. This alignment ensures that the rotational force generated by the motor is directly imparted to the tool with the axis of rotation parallel to the disk axis, minimizing energy loss and mechanical complexity. The parallel alignment of the tool to the tool turret may be important for maintaining the structural integrity and balance of the tool turret. It may ensure that the forces generated during machining are evenly distributed, reducing wear and tear on the components, and enhancing the precision of the machining process.

Another aspect of the present invention, the rotation axis of the first driving means may be (substantially) parallel to the disk axis. As a result, the tools extending in the axial direction may be effectively driven by the first driving means, which may be an external motor in such a configuration.

As an example of the technical implementation for the tools with axis of rotation parallel to the disk axis, a driving shaft of the first driving means may be designed to extend through the tool disk and align with the drive shaft of the received tool. In such a configuration the shafts may be co-axial or parallel to each other. However, the present system may be not limited to a such implementation.

Another possible implementation in which the rotation axis of the shaft of the first driving means and the tool axis may be co-axial or parallel to each other, but both axes are not parallel to the disk axis. This configuration may enable a more special placement of the tool which still enable the advantages of the configuration of the system with direct drive motor which eliminate the need of the gears for coupling the tool and the driving shaft of the first driving means. The tool axis of rotation can be set at different angles relative to the disk axis, based on the tool turret's design and motor placement. Generally, the tool axis and the motor axis of rotation may be almost parallel to the disk axis. Nevertheless, they may be adjusted to angles between 5 and 70 degrees to suit various machining needs. This adjustability ensures the tool is positioned optimally for performance, while also maintaining precision and efficiency. For such an implementation, a customary tool slots for the turret disk may be used which are extend through the body of the turret disk under the certain angle its central axis, wherein the angle between the central axis of the slot and the disk axis is within 5 to 85 degrees, or preferably within 3 to 30 degrees.

Another aspect of the present invention is that the first driving means may be cooled by an active and/or passive cooling means, and preferably coolant lines of which extend through the support of a housing, or coolant lines are placed outside of the housing.

The technical effect is that the outside placement of the motor and its modular function may allow to introduce various cooling systems which may efficiently cool the first driving means or the motor. As a result, more efficient heat dissipation strategies may be implemented to remove the heat from the motor and the motor to tool coupling which allows.

The different examples of the cooling means or active cooling means may comprise but not limited to air cooling, liquid cooling and/or heat sinks, and their respective combinations. For example, the air cooling may be realized via means as fans and fins for heat dissipation. The fan, mounted on the motor shaft, forces air over the fins attached to the motor housing, enhancing heat dissipation.

For example, the motor may be equipped with vents and louvers placed to facilitate the intake and exhaust of cooling air. Openings may be added to the motor configuration, wherein these openings may be designed to maximize airflow while protecting the motor from dust and debris. In addition, by providing the cooling techniques as, for example, ventilation in the working space/working room the heat dissipation may be further facilitated and, thus, the threshold may be effectively increased to even higher value of the maximum rotation speed.

Furthermore, the cooling means may be a liquid cooling which involves circulating a coolant (such as water or oil) through channels or jackets around the motor. The coolant may absorb heat from the motor and is then circulated through a heat exchanger to dissipate the heat. The cooling means may further comprise a pump and a radiator, wherein the pump may circulate the coolant, and a radiator or heat exchanger may release the absorbed heat into the environment.

A further possible way to facilitate the cooling mechanism may be by providing heat sinks made of materials with high thermal conductivity, for example, like aluminium or copper, which may be attached to the motor to draw heat away from the motor components. Heat sinks may be designed with fins or extended surfaces to maximize the surface area available for heat dissipation. The shape and configuration of the fins can vary, including straight fins, pin fins, or flared fins, each optimized for different airflow conditions and cooling requirements. Heat sinks may be often directly attached to the motor housing or specific components that may generate significant heat, such as the stator or the rotor.

By utilizing materials with high thermal conductivity and optimizing the design for maximum surface area, the heat sinks may ensure that motors operate within optimal temperature ranges. Furthermore, the temperature sensor may be integrated into the motor to monitor the operating temperature and to trigger cooling mechanisms or shut down the motor if it exceeds the predetermined threshold.

In addition, the insulating and coating can be applied to the different parts of the first driving means. Thermal insulation involves using materials that have low thermal conductivity to protect sensitive motor components from excessive heat.

Common insulating materials include fiberglass, ceramic fibers, and specialized polymers.

Insulation and coatings may provide effective cooling for motors by enhancing thermal management, improving performance, and extending component lifespan.

The cooling means can be any of the above-described parts and units or any combination of them with each other.

Another aspect of the present invention, the first driving means and/or a connecting part between a received tool and the first driving means may be configured to be driven without an active cooling. With the present, system the first driving means or the motor may be coupled to the external structures as the turret head or the turret body. The advantage of the external motor is that the heat dissipation may be more effective in comparison to the internal motor placement as a result it may be possible to provide the system as described before even without any cooling means.

The external motors may rely solely on passive cooling through heat dissipation, the rotation speed may be kept below certain/predetermined threshold to ensure that the motor does not overheat. Specifically, the rotation speed for such motors may be up to 3,000 RPM (rotations per minute). The motor may be a small low-speed spindle motor which are used for tasks such as engraving, light milling, and drilling. At this speed, the motor may dissipate heat effectively through its housing and surrounding environment without the need for additional cooling systems. The threshold rotation speed may be not limited for the value of 3000 RPM and can vary based on factors such as the motor's size, design, and the materials used in its construction. For example, the threshold for a maximum rotation speed can be 6000 PRM for motors. This is specifically relevant for medium-sized spindle motors, which are suitable for general-purpose CNC milling and turning operations.

Another aspect of the present invention is that the turret may be an axial turret of a universal turning machine and the tools may be milling tools and the turret unit may be configured to preform operations including milling, drilling, and/or tapping operations.

The turret unit may be used for a universal turning machine or lathe and offers significant technical advantages, including versatility, efficiency, precision, cost savings, and space efficiency. By integrating milling, drilling, and tapping capabilities into a single turret unit, the system may enhance the overall performance and productivity of the machining process.

The examples of the drilling tools may comprise twist drills, center drills, step drills etc. The twist drills, featuring a helical flute design, may be a type of drilling tool and may be suitable for a wide range of materials, including metals, plastics, and wood. The center drills, with a short, rigid design and a pointed tip, may be especially suitable for starting holes accurately and creating pilot holes that guide larger drills. The step drills, with a stepped design, may allow for drilling holes of various diameters with a single tool, making them useful for applications requiring multiple hole sizes in sheet metal and other thin materials.

The examples of the tapping tools may comprise, but not limiting to, the tools as hand taps and machine taps, which may be used to cut internal threads in pre-drilled holes. The hand taps come in sets of three (taper tap, plug tap, and bottoming tap) and may be used for manually cutting threads, typically with a tap wrench.

The milling tools may be the tools such as end mills, face mills, and ball nose mills. The end mills may be versatile cutting tools with cutting edges on the periphery and the end, allowing them to perform tasks such as slotting, profiling, and contouring. The face mills, with multiple cutting edges arranged around a central axis, may be designed for high-efficiency material removal, and may be used for machining large, flat surfaces. The ball nose mills, with a rounded cutting edge, may be suitable for 3D contouring and complex surface machining, making them suitable for finishing operations on curved surfaces.

The ability to use milling, drilling, and tapping tools in the single turret unit may allow for a wide range of machining operations to be performed on one machine. This versatility may reduce the need for multiple machines and setups, saving time and space. The turret unit may handle complex machining tasks, including creating intricate shapes, drilling precise holes, and cutting threads, all within a single setup. In addition, the possibility to perform multiple operations in one machine may further streamline the workflow, reducing the need for material handling and movement between different machines.

It is further relevant to specify that the present invention is different from the assembly in which the motor and tool are built together as a single unit which may be coupled/inserted into the tool slot. The one aspect may be that the configuration of combined tool and motor as one unit which is introduced into the turret disk presents some notable disadvantages. These disadvantages may include increased complexity in design and manufacturing of the combined unit, challenges in heat management especially in view of the small size of the motor, higher maintenance and replacement costs, limited flexibility, potential weight and balance issues, and possible noise and vibration concerns. In addition, due to the space constrains it may be difficult to introduce the motor with high rotation speed and/or torque in such an assembly. However, the placement of the first driving means according to the present invention and connection with the tool via a rotation of the turret disk may resolve or improve at least some of the issues related to the complexity, heat management, vibration and flexibility which provide a further advantage in comparison to the known configurations. The overall size of the motor may be further increased which may lead to the motor design with comparatively better parameters of the rotation speed and the roque transfer than the tool combined with motor and inserted in the slot.

Another aspect of the present invention is that during a rotation of the turret disk a relative position of the tools inserted in the slots of the turret disk and the first driving means may be changing in relation to each other. Specifically, when the tool is uncoupled from the first driving means/motor and the turret disk may be rotated while the position of the motor remains unchanged, wherein the motor may be fixed or attached to the turret body or turret head.

Another aspect of the invention is that the first driving means may further comprise a receiving portion, and the receiving portion is configured to directly connect and/or clamp with the tool. The receiving portion of the first driving means may be a critical component designed to facilitate the connection, preferably direct connection, and secure clamping of the tool. This portion may be engineered to ensure a robust and precise interface between the driving means and the tool, enhancing the overall performance and reliability of the machining process. In addition, the clamping system within the receiving portion may be designed to apply uniform and controlled clamping force to the tool. This system may be hydraulic, pneumatic, or mechanical, depending on the specific requirements of the application. The clamping force may be adjustable to accommodate different tool sizes and materials, ensuring a secure hold during operation. The receiving portion may be further equipped with a quick-change capability, allowing for rapid tool changes with small downtime.

Furthermore, the motor to tool connection may comprise a live tool transmission interface. The live tool transmission interface may be a component that serves as a bridge between the motor and the tool, i.e., in CNC machines, particularly in turning centers and lathes. The live tool transmission interface may be a shared component that belongs to both the motor and the tool. The live tool transmission interface may include elements that are part of the motor assembly (like the motor spindle and drive keys) and elements that are part of the tool assembly (like the tool holder and tool holder slots for receiving the tool). The coupling mechanism may serve as the intermediary components that connect the motor to the tool, ensuring precise and stable power transmission. Therefore, the live tool transmission interface may be an integrated system that facilitates the connection and efficient operation of both the motor and the tool.

Another aspect of the present invention is that the first driving means or motor may be configured to independently connect with any of a plurality of the tools received in a slot of the turret disk. Specifically, the motor may be designed to connect with different tools inserted in the axial slots. The word "independently" means that the motor can connect to one tool at a time. The motor may be connected to another tool by uncoupling motor to tool connection, rotating the turret disk to align next tool and coupling the motor to tool again.

The resulted system may be engineered to facilitate the efficient coupling and uncoupling of the motor to various tools housed within the turret disk. The motor, specifically the external motor, may be positioned adjacent to the turret disk. The motor may be equipped with a coupling mechanism that allows for precise alignment with the tool or tool holder currently in the operating position. Once the operation with a specific tool is complete, the coupling mechanism may be activated to release the specific tool, according to a method of the present invention. This action may uncouple the motor from the tool or tool holder, allowing the motor to be disengaged. The turret disk may be rotated to position the next tool or tool holder ensuring accurate alignment of the new tool with the first driving means. Thus, the next tool may be coupled to the motor or the first driving means for different operations, i.e., drilling, milling or tapping.

This system is designed for rapid tool changes, precise alignment, and continuous operation, making it suitable for high-performance machining applications. The device's precision alignment and secure coupling mechanisms ensure that each tool change is executed with high accuracy. This precision is important for maintaining the quality and consistency of the machining operations.

After the turret disk may be rotated to the correct position, the external motor may be realigned with the new tool or tool holder. The hydraulic or pneumatic mechanism may be activated again to engage the coupling device, securely connecting the motor to the new tool. This re-coupling process may be designed to be quick and efficient, minimizing downtime and maximizing productivity.

Additionally, the robust design of the coupling and uncoupling mechanisms enhances the overall reliability of the system, reducing the risk of tool disengagement or misalignment during operation.

Another aspect of the present invention is that the first driving means may be positioned on a rear side of the turret disk and the tool is received at a front side of the turret disk, and wherein the tool may be coupled to the receiving portion of the first driving means inside the slot of the turret disk.

The rear side of the turret disk may refer to the side that faces away from the workpiece and towards the machine's internal components, such as the motor and control systems. This side may not be visible to the operator during normal operation. The first driving means, which includes the motor and associated components, may be mounted on this rear side. This positioning may allow the motor to be securely attached to the machine's structure, providing stability, and reducing vibrations during operation.

The front side of the turret disk may be the side that faces the workpiece and may be visible to the operator. This side may be the side where the tools are mounted and may interact with the material being machined. The tools may be received in slots on this front side, allowing for easy access and visibility for the operator. This positioning may facilitate quick tool changes and adjustments.

The tool may be inserted into the designated slot on the front side of the turret disk. The slot may guide the tool into the correct position, ensuring proper alignment with the receiving portion of the first driving means. The receiving portion may include a clamping system that applies uniform and controlled clamping force to the tool. Direct drive motors may be designed to deliver high torque at low speeds.

Another aspect of the present invention is that the first driving means may be a synchronous or asynchronous motor. Synchronous motors may be characterized by a rotor that moves in exact synchrony with the rotating magnetic field of the stator. Asynchronous motors, or induction motors, operate on the principle of electromagnetic induction where the rotating magnetic field of the stator induces a current in the rotor. If the application requires high precision in speed control, synchronous motors may be preferred and if energy efficiency and power factor correction are priorities, synchronous motors could provide better performance. Alternatively, in environments where maintenance capabilities are limited, the robustness and low maintenance requirements of asynchronous motors may be preferrable.

Another aspect of the present invention is that the first driving means may be a direct drive motor. The direct drive motor may refer to a motor that is directly connected to the load it drives, without any intermediate gears, belts, or pulleys. This configuration may ensure that the motor's output shaft is directly coupled to the tool, providing a one-to-one transmission ratio. The absence of a gearbox or other transmission systems means there are fewer moving parts, reducing wear and potential points of failure. The direct connection may allow for immediate torque transmission from the motor to the tool, enhancing responsiveness and control during machining operations.

Another aspect of the present invention is that the first driving means may be directly coupled to the tool connecting portion of the tool inserted in the turret disk and, if necessary, the coupling means may be controlled by means of a hydraulic or pneumatic activating means.

The configuration may involve the first driving means as, as for example, the external motor that may be designed to be connected to a tool or tool holder through a hydraulic or pneumatic actuation system. This setup may allow for the motor to be mounted externally to the turret disk, with the tool or tool holder being inserted into the turret disk as a separate component. The hydraulic or pneumatic mechanism within the motor may facilitate a secure and precise connection to the tool or tool holder, ensuring efficient power transfer and control.

The operation of this coupling mechanism may be governed by a hydraulic or pneumatic system, which may be activated to extend a piston that engages the coupling or to apply pressure to activate the clamping action. Control over this system may be managed by the controller, for example CNC controller, of the machine, which may dictate the appropriate times for engagement and disengagement based on the programmed machining tasks.

During a tool change, the turret may rotate to align the new tool with the motor. The hydraulic or pneumatic system may be then activated, pushing the coupling mechanism to engage securely with the tool. After the completion of the operation, or when a tool change may be required, the system may disengage the tool by retracting the coupling mechanism. This disengagement may be also controlled by the hydraulic or pneumatic system, ensuring a smooth transition and minimal downtime between tool changes.

Furthermore, the first driving means as the motor may be coupled to the tool connecting/receiving portion in one hydraulic or pneumatic movement.

Another aspect of the present invention is that the turret unit with the first driving means as described in details above may provide special advantages with the configuration of the turret disk with axial slots. However, the configuration is not limited only to the turret disks with axial slots. The turret disk may further comprise one or more radial slots extending in a radial direction orthogonal to the disk axis.

The motor or the first driving means may be used with a drive gear that meshes with a corresponding gear attached to or integrated with the tool. This gear arrangement may allow for several advantages in power transmission. Firstly, it may provide a mechanical advantage, potentially increasing the torque delivered to the tool or adjusting the speed ratio between the motor and the tool. This may be particularly useful for adapting the motor's output characteristics to the specific requirements of different machining operations.

Another aspect of the present invention is that the turret unit according to any of the above-described configurations or their combinations may be installed or used in a machines tool such as lathe, CNC machine etc. The working machines may be machines suitable and/or used for milling, drilling, tapping or similar type of operations for production and manufacturing the components and items.

Another aspect of the present invention is that wherein one or more or each carrier supports may be configured to independently move the respective turret unit in one or more linear directions. For example, the linear directions may include at least one of a H-axis movement direction for moving the turret unit horizontally in a direction in parallel to the spindle axis of the main spindle and an R-axis movement direction for moving the turret unit radially with respect to the spindle axis of the main spindle

Another aspect of the present invention is that wherein one or more or each carrier supports of the machine tool may be configured to independently move the respective turret unit in one or more linear directions, including at least one of a H-axis movement direction for moving the turret unit horizontally in a direction in parallel to the spindle axis of the main spindle and an R-axis movement direction for moving the turret unit radially with respect to the spindle axis of the main spindle

### Figures

Figure 1- a turret unit with a first driving means for driving the tool inserted in the axial slot of the tool disk;
Figure 2 - the turret unit with an addition of a second driving means for rotating the turret disk;
Figure 3 - the turret unit in which the first driving means is configured to drive both the tool and the turret disk;

### Detailed description

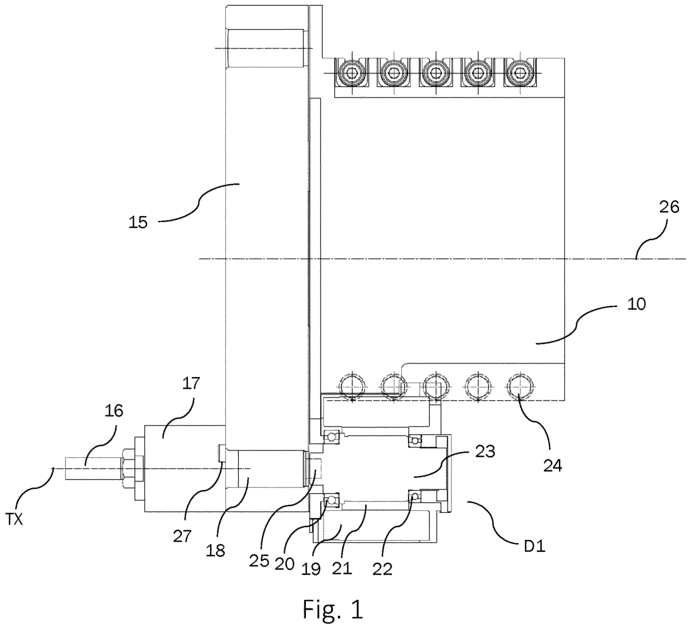

Fig. 1 shows a turret unit configuration according to at least one embodiment of the present invention The turret unit comprising the components as a turret body 10, a turret head including a turret disk 15, a first driving means D1, a tool 16 with a tool holder 17. The turret body 10 serves as the main structural component of the system, providing support and housing for other components. The tool head is the part of the turret unit that holds the individual tools 16, wherein based on different configuration of the turret unit the turret disk 15 can be a part of the turret head. The tools 16 can be interchangeable, allowing for quick tool changes. The tool disk 15 includes slots 17 which can accommodate the tool holders 17 or the tools 16. Either the tool 16 or the tool holder 17 have a live tool transmission interface 25, which connects the tool 16 to the first driving means D1. The tool head is mounted on the turret body or body 10 and can be rotated around turret axis/disk axis to position different tools for machining.

The turret disk 15 is a rotating platform that holds multiple tools in slots 18, which may be also called as tool slots 18. The turret disk 15 is driven by the disc motor 11. There are different configurations and implementations which enable the rotation of the turret disk 15 by the corresponding driving means or a driving shaft. The turret disk features multiple slots 18 that extends along axial direction of the turret disk 15 or along turret axis 26. The slots 18, or axial slots, are also aligned parallel to a tool rotation axis TX, which is a rotation axis of the tool 16. This parallel alignment ensures that the tools 16 are correctly oriented for rotational machining operations, such as milling or drilling. The slots 18 may include additional features such as grooves or notches to enhance the clamping and alignment of the tools 16. These features help maintain the correct orientation and prevent any movement during machining operations.

In addition, alignment pins 27 are used to ensure the precise positioning and orientation of the tool holders 17 and tools 16 within the slots 18. They help maintain the correct alignment during tool changes and machining operations. The alignment pins 27 are strategically positioned within the slots 18 or adjacent to them. They engage with corresponding holes or notches in the tool holders 17, ensuring that the tools 16 are correctly oriented and aligned with the turret disk 15. When a tool holder 17 is inserted into the tool slot 18, the alignment pin 27 engages with a corresponding hole or notch of the tool holder 17. In some configurations, the alignment pins 27 may be part of a locking mechanism that secures the tool holder 17 in place.

The axial slots or tool slots 18 may be uniformly distributed around the circumference of the turret disk 15. The tool slots 18 are oriented parallel to the disk axis 26. The tool slots 18 are through holes which extend from the back of the turret disk 15 to the front of the turret disk 15, creating a continuous passage through a body of the turret disk 15. The width and depth of the axial slots are carefully designed to accommodate the tool holders and tools securely. The dimensions are chosen to provide a snug fit of the tools 16 or tool holders 17.

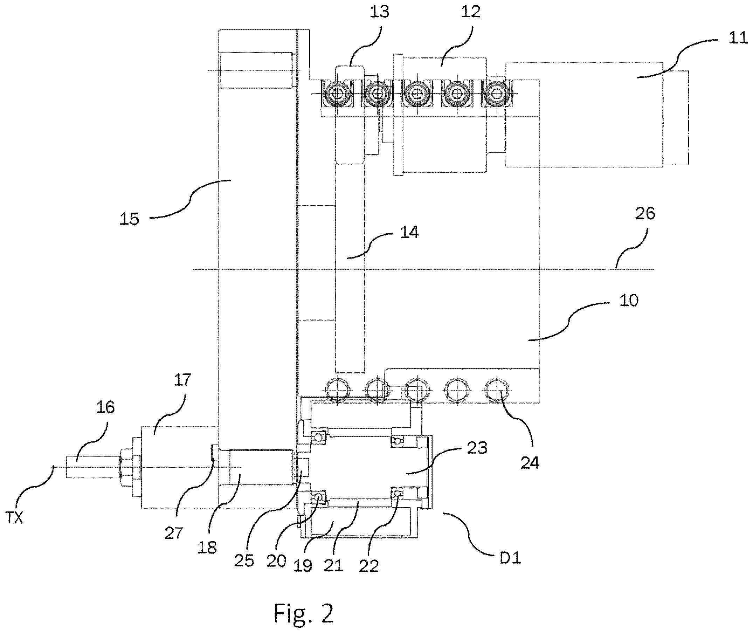

The rotation of the turret disk can be realized via different driving mechanisms. For example, the configuration with an additional external motor with gear transmission can be used. In this configuration which is also shown in Fig. 2, a disk motor 11 is mounted on the turret body 10. The motor's output shaft is connected to a gear transmission system that drives the turret disk 15. The disk motor 11 rotates, driving the gears 13 in the transmission system. The gears 13 engage with the central gear 14 on the turret disk 15, causing the turret disk 15 to rotate. The turret disk 15 positions different tools 16 for further machining operations. As possible variation, the disk motor 11 can be combined with belt drive system which includes pulleys and a belt that transmit the motor's rotation to the turret disk 15.

However, a mechanism for turret disk 15 rotation is not limited to disk motor only. Alternatively, the driving mechanism may be an internal motor which is integrated within the turret body 10 and is directly connected to the turret disk 15. This direct drive configuration eliminates the need for intermediate gears or belts. Another variation is a combination is when the internal motor is connected the turret disk through a gearbox which reduces the motor's speed while increasing its torque.

In some machining systems, particularly in lathes, the driving motor responsible for rotating the turret disk 15 around turret axis 26 is in a main body of a machine tool, such as lather, rather than in the turret unit. The main body of the machine tool as lathe houses the primary driving motor and provides the structural support for the entire machine. It includes the bed, headstock, tailstock, and carriage. A driving motor may be located in the headstock of the lathe. This motor is responsible for providing the rotational power needed for machining operations. The driving motor can rotate the turret disk 15, for example, via a system of a combination of different gearings or gearings and belt drives.

A specific example of the first driving means or motor of Fig. 1 comprising at least a stator 19, a front bearing 20, a rotor 21, rear bearing 22, shaft 23. The stator 19 is the stationary part of the motor and is mounted securely within the motor D1. It contains the windings and magnetic core, which generate a rotating magnetic field when electrical current is applied. The stator 19 is typically constructed from laminated silicon steel to minimize eddy current losses and improve efficiency. The windings are made of copper or aluminium and are insulated to prevent short circuits.

The front bearing 20 is positioned near the front end of the motor D1, close to the tool slots 18 on the turret disk 15. The front bearing 20 supports the rotor 23 and allows it to rotate smoothly with minimal friction. The front bearing 20 may be designed to handle both radial and axial loads. The front bearing 20 is lubricated to reduce wear and extend its operational life. The rear bearing 22 is positioned at the back end of the motor D1, opposite the front bearing 20. Like the front bearing 20, they support the rotor 21 and allow the rotor 21 to rotate smoothly. The rear bearing 22 is designed to handle the axial and radial loads imposed by the rotation of the rotor 21, ensuring the rotor 21 remains stable and accurately aligned.

The shaft 23 is a component that transmits the rotational motion generated by the rotor to the to the following item such as gearing or tool, enabling the item to rotate. The rotor 21 is securely mounted on the shaft 23, ensuring that the rotational motion generated by the rotor 21 is directly transmitted to the shaft 23. The shaft 23, in turn, transmits this motion tool 16 or the tool holder 17. The connection between the rotor 21 and shaft 23 may be achieved through a keyed or splined interface.

The rotor 21 is the rotating part of the motor D1 and is directly connected to the shaft 23. The rotor 21 interacts with the magnetic field generated by the stator 19 to produce rotational motion. The rotor is designed to be lightweight yet strong, often made from high-strength materials such as aluminium or composite alloys. It includes conductive elements, such as copper bars or windings, which induce the required electromagnetic forces for rotation.

The first driving means D1 can be connected or attached to turret body 10 via fixing screws 24 and bolts, these fastening means provide a strong and reliable connection between the driving means and the turret body 10. Various types of the fixing crews 24 and bolts can be used, including hex bolts, socket head cap screws, and machine screws. Furthermore, a motor mounting bracket may be used which is a metal frame that holds the motor D1 in place. The bracket is attached to the turret body 10 using fixing screws 24, bolts, or comparable fasteners. In addition, vibration dampening mounts may be used to reduce the transmission of vibrations from the motor D1 to the turret body 10. These mounts are typically made from rubber or other elastomeric materials and placed between the motor D1 or its bracket and the turret body.

The coupling of the tool 16 or tool holder 17 with the first driving means D1 as motor is described in detail below for Fig. 1. The tool holder 17, with the tool 16 mounted in it, is inserted into the tool slot 18 on the turret disk 15. The tool slot 18 is designed to fit the tool holder precisely, ensuring accurate positioning. The alignment pin 27 is used to ensure that the tool holder 17 is correctly oriented and aligned within the tool slot 18. The clamping mechanism is activated by the motor's control system, which sends a signal to the hydraulic or pneumatic system of the first driving means 18 to apply clamping force. The hydraulic or pneumatic system applies a uniform and controlled clamping force to the tool holder 17, securing it within the tool slot 18. This force ensures that the tool holder 17 remains stable and does not move during machining.

The embodiment may further comprise a live tool transmission interface 25 which is used to connect the first driving means D1 to the tool holder 16. The live tool transmission interface 25 ensures efficient power transfer and precise control over the tool's rotation. The motor shaft 23 is directly coupled to the tool holder 17 or the tool 16 via the live tool transmission interface 25. In the embodiment of Fig. 1 the direct drive motor is demonstrated, however as discussed before the motor D1 is not strictly limited to such a configuration.

The first driving means D1 is activated, providing the necessary rotational power to drive the tool 16. The motor's speed and torque are controlled by the motor controller (not shown), ensuring precise and consistent machining operations.

After the required machining operations have been performed, the tool can be uncoupled/unclamped from the first driving means/motor D1. Specifically, the first driving means D1 is deactivated, stopping the rotation of the tool 16. The hydraulic or pneumatic system releases the clamping force applied to the tool holder 17 under the command of the controller, allowing it to be removed from the tool slot 18. The live tool transmission interface 25 is disengaged, disconnecting the first driving means D1 from the tool 16. The tool holder 17, along with the tool 16, is removed from the tool slot 18.

Afterwards, the driving mechanism is activated to rotate the turret disk 15. The driving mechanism can be any of the mechanisms described above, as general external motor, internal motor or motor placed in the machining tool as lathe. The turret disk 15 rotates smoothly around the turret axis 26, positioning the next tool 16 in line with the first driving means D1. The next tool holder 17, with the new tool 16 mounted in it, is inserted into the tool slot 18 on the turret disk 15. The alignment pin 27 is used to ensure that the tool holder 17 is correctly oriented and aligned within the tool slot 18. The hydraulic or pneumatic system applies a uniform and controlled clamping force to the tool holder 17, securing it within the tool slot 18. The motor's shaft 23 is directly coupled to the tool holder 17 or the tool 16 via the live tool transmission interface 25. The first driving means D1 is activated, providing the necessary rotational power to drive the new tool 16.

Using the same external motor to drive a plurality of tools in a machining system offers numerous advantages, including cost efficiency, space savings, enhanced efficiency, improved precision and control, simplified integration and operation, reduced vibration and noise, flexibility and versatility, and enhanced reliability. These benefits make this configuration an appropriate choice alternative for high-performance machining applications, ensuring consistent, high-quality results and long-term operational efficiency.

The controller (not shown) is used for monitoring and operating the units in the machining system is a standard controlling device. The controller for the first driving means D1 is typically housed within the main electrical cabinet of the machining system. This cabinet is often located adjacent to the machine tool or integrated into the machine's base. The primary position ensures that the controller is easily accessible for maintenance and programming.

In some configurations, the controller can be mounted directly on the turret body 10 or within a dedicated enclosure on the machine's frame. This alternative position minimizes the distance between the controller and the motor, reducing potential signal loss and improving response times. The controller regulates the motor's speed, torque, and position with high precision, ensuring consistent and accurate machining operations. The controller receives real-time feedback from sensors, such as encoders or resolvers, to make precise adjustments and maintain optimal performance.

Fig. 2 shows a further modification of the embodiment described before. Specifically, the difference that the driving mechanism for the turret unit 15 is specified in more detail. Specifically, the driving mechanism is the disk motor 10 which is a second external motor.

In the exemplary embodiment shown in Fig. 2, the disc motor 11 or a second driving means further includes a transmission system that includes a reducer 12, a gear 13, wherein the gear 13 rotated by the disk motor 11 interact with a central gear 14 and rotate the central gear 14 accordingly. The central gear 14 is connected to the turret disk 15 and engages with the gear 13 driven by the disc motor 11.

The second driving means 11 is configured to rotate the turret disk 15 around a specific axis, referred to as the disk axis 26. The second driving means 11 extends away from the turret disk 15 along its rotating axis 26. This positioning allows for efficient transfer of rotational force to the turret disk 15. The second driving means 11 is integrated into the turret head or turret body 10 design in a way that does not extend beyond the axial length of other components, contributing to a compact overall design while still providing the necessary rotational force. By rotating the turret disk 15, the second driving means 11 allows for the positioning of different tools 16 mounted on the turret disk 15 into the desired operating positions for machining operations.

Similarly to the first driving means D1, the second driving means 11 can be connected or attached to turret body 10 via fixing screws 24 and bolts, these fastening means.

The order of the operations for the first driving means D1 and the second driving means 11 are similar to the described in the embodiment before. According to a method of the present invention, after the clamping mechanism is released and the tool or tool holder 17 is disengaged from the first driving means D1. The second driving means 11 is activated to rotate the turret disk 15. The motor's rotational motion is transmitted through the reducer 12, gear 13, and from the central gear 14 to the turret disk. Afterwards, the turret disk 15 is rotated to the predetermined position to align the next tool 16 with the first driving means D1. The tool holder 17 or the tool 16 is coupled with the first driving means D1 via live tool transmission interface 25 and/or clamping mechanism of the first driving means D1.

As a result, the effective change of the tool 16 was performed and the next tool 16 can be driven by the first driving means D1 with preferably direct drive connection which further facilitate the speed and torque transfer from the motor D1 to the tool 16.

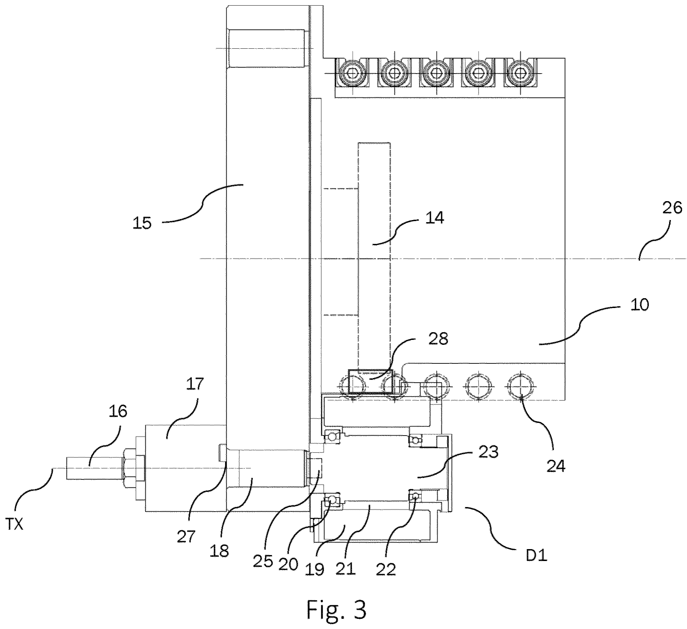

Fig. 3 shows an alternative embodiment to the embodiment of Fig. 2 and is based on embodiment of Fig. 1. Embodiment of Fig. 3 shows a specific example of alternative driving mechanism for the turret disk 15. The system employs the first driving means D1 as a single motor, to perform two key functions: rotating the tool 16 or the tool holder 17 and the turret disk 15. This approach enhances efficiency and simplifies the overall structure by using the first driving means D1 for both operations. The process of the changing the tools is similar to the previous embodiment, thus the detailed description is not required.

In terms of operation, tool holder 17 containing tool 16 is inserted into tool slot 18, and the alignment pin 27 ensures precise orientation. The clamping mechanism engages to secure tool holder 17, and the first driving means D1 activates to rotate tool 16 via the live tool transmission interface 25.

During the tool change process, the first driving means D1 halts the rotation of the current tool 16, and the clamping mechanism disengages, releasing tool holder 17. The first driving means D1 then reconfigures to rotate the turret disk 15.

Specifically, the control system activates a gear selector mechanism. This mechanism is responsible for shifting the gears into the correct position for turret disk 15 rotation. The gear selection mechanism may utilize a combination of linear actuators, servo motors, or solenoids to move gear sets with high precision. As the gears shift, they may align transfer the rotation from the motor to the central gear 14 of the turret disk 15.

The controller may monitor multiple sensors that provide real-time feedback on gear positions, shaft alignments, and rotational speeds. It uses this data to make micro-adjustments, ensuring that gear teeth are perfectly aligned before engagement occurs. This precise alignment is crucial to prevent gear damage and ensure smooth power transmission between the first driving means D1 and the turret disk 15.

Further, the control system initiates the engagement process. This typically involves closing the gap between the gears and activating a clutch mechanism to connect the gear train. The engagement is rather a gradual process where the control system slowly increases the load on the gears to prevent shock to the system. During this phase, the control system carefully modulates the torque and speed of motor D1 to facilitate a smooth engagement with the turret disk 15 via gearing coupling.

With the gear coupling fully engaged, the first driving means D1 is now connected to drive the rotation of the turret disk 15. The control system continues to play an active role, regulating the speed and torque of D1 to achieve the desired rotation of the turret disk 15.

Throughout this entire process, the control system also manages various safety mechanisms. It checks interlocks to prevent engagement if the system is not properly aligned, monitors torque limiters to prevent damage in case of unexpected resistance, and stands ready to activate emergency stop systems if any anomalies are detected during the rotation of the turret disk 15 or operation of D1.

This intricate process of gear engagement and reconfiguration of the first driving means D1, orchestrated by the control system, allows for efficient switching between tool 16 operation and turret disk 15 rotation, minimizing downtime and maximizing the versatility of the machining system.

The first driving means D1, now engaged with the turret disk 15 through the gear coupling mechanism, begins to rotate the turret disk 15 to the predetermined position to align the next tool 16 with the first driving means D1. This rotation is monitored in real-time by position sensors or encoders that provide feedback on the disk's angular position.

As the turret disk 15 rotates, it brings the next tool slot 18 into the desired position. The control system may further use the feedback from the position sensors to determine when the correct angular position has been reached. This ensures that the new tool 16 is accurately aligned for the next machining operation.

Once the turret disk 15 reaches the correct position, the control system initiates the stopping sequence. It gradually reduces the speed of D1, applying precise braking to bring the turret disk 15 to a complete stop without overshooting the desired position.

After the turret disk 15 is stationary and correctly positioned, the disengagement process begins. The control system sends signals to disengage the gear coupling mechanism that connects D1 to the turret disk 15. This step may involve: activating a mechanism to disconnect the power transmission, shifting gears or other mechanical components to physically separate D1's output shaft from the turret disk's drive system, optionally, locking mechanism may be applied to hold the turret disk 15 firmly in place.

Once D1 is fully disengaged from the turret disk 15, the control system prepares it for re-engagement with the new tool 16. This may involve repositioning the shaft 23 or adjusting other components to align with the live tool transmission interface 25 of the newly positioned tool 16.

Throughout this process, safety mechanisms remain active. The control system continuously monitors for any anomalies, ready to halt operations if any issues are detected during the rotation of the turret disk 15 or the disengagement of D1.

The turret disk 15 around disk axis 26, positioning the subsequent tool 16 in alignment with the first driving means D1.

For next tool engagement, the next tool holder 17 with tool 16 is inserted into tool slot 18. The alignment pin 27 ensures correct orientation, and the clamping mechanism engages to secure the new tool holder 17. The first driving means D1 reconfigures to drive the new tool 16 through the live tool transmission interface 25.

Overall, this single-motor configuration leads to a more efficient, compact, and cost-effective turret system while maintaining high precision and performance in machining operations.

In addition, the embodiments of Fig. 2 and Fig. 3 is described as alternatives, however they can be combined in the same system especially by introducing the shifting gears or other decoupling means which can disconnect either the first driving means or the second driving means from the central gear 14, thus preventing the rotation of the turret disk from the corresponding driving means. In such a system the rotation of the turret disk is performed by one of the motors at a time, by either first driving means D1 or by the second driving means 10. The possibility of using two motors further facilitate the reliability of the entire system since if one of the motors fails, for example the second driving means, another motor can be used to effectively perform the machining operations without terminating the whole process.

Various modifications of the described above embodiments are also supported by the description. The different part of one embodiment can be incorporated or combined with another embodiment.

### Reference sings

- 10 -: Body (turret body)
- 11-: Disc motor (second driving means)
- 12 -: Reducer
- 13 -: Gear
- 14 -: Central gear
- 15 -: Turret Disc
- 16 -: Tool
- 17 -: Tool holder
- 18 -: Tool slot (slot)
- 19 -: Stator
- 20 -: Front Bearing
- 21 -: Rotor
- 22 -: Rear bearing
- 23 -: Shaft
- 24 -: Fixing screws
- 25 -: Live tool transmission interface (connecting portion)
- 26 -: Turret axis (disk axis)
- 27 -: Alignment pin
- 28 -: shifting gear
- D1 -: first driving means (motor/tool motor)
- TX -: tool rotation axis

## Claims

1. Turret unit for a machine tool, in particular a universal turning machine or a lathe, the turret unit comprising:
a turret body (10) configured to be mounted to a tool carrier of the machine tool;
a turret head mounted to the turret body (10) and including a turret disk (15), wherein the turret disk (15) is configured to be rotatable around a disk axis (26) and has a plurality of slots (18) for receiving tools (16); and
a first driving means (D1) attached to the turret head or the turret body (10);
wherein a tool rotation axis (TX) of a tool (16) received in a slot (18) of the plurality of slots (18) is substantially parallel to the disk axis (26); and
wherein the first driving means (D1) is configured to couple to the tool (16) received in the slot (18) of the turret disk (15).

2. Turret unit according to at least one of the preceding claims, wherein the first driving means is configured to be connected directly to a received tool (16) or tool holder (17), to provide a direct connection without a gear transmission in-between.

3. Turret unit according to at least one of the preceding claims, wherein the first driving means (D1) is configured to directly couple to a received tool (16) having a tool axis (TX) of rotation which is substantially parallel to the disk axis (X).

4. Turret unit according to at least one of the preceding claims, wherein the turret is an axial turret of a universal turning machine with the possibility to use milling tools and the turret unit is configured to preform operations including milling, drilling and/or tapping operations.

5. Turret unit according to any of the preceding claims,
wherein the first driving means (D1) further comprises a receiving portion, and the receiving portion is configured to directly connect and/or clamp with the tool (16).

6. Turret unit according to any of the preceding claims,
wherein the first driving means (D1) is configured to independently connect with any of a plurality of the tools (16) received in a slot (18) of the turret disk (15).

7. Turret unit according to any of the preceding claims,
wherein the first driving means (D1) is positioned on a rear side of the turret disk (15) and the tool (16) is received at a front side of the turret disk (15), and
wherein the tool (16) is coupled to the receiving portion of the first driving means (D1) inside the slot (18) of the turret disk (15).

8. Turret unit according to any of the preceding claims,
wherein the first driving means (D1) is configured to rotate the turret disk (15) and to rotate a tool (16) received a slot (18).

9. Turret unit according to claim 8,
wherein a gear coupling mechanism is configured to connect the first driving means (D1) to the turret disk (15), enabling the rotation of the turret disk (15) to position different tools; and
a control system that is configured to manage the engagement and disengagement of the gear coupling mechanism, allowing the first driving means (D1) to switch between rotating the turret disk (15) and the tools (16).

10. Turret unit according to any of the preceding claims,
wherein the first driving means (D1) could be a synchronous or asynchronous motor.

11. Turret unit according to any of the preceding claims,
wherein the first driving means (D1) is a direct drive motor.

12. Turret unit according to any of the preceding claims
wherein the first driving means (D1) is directly coupled to the tool connecting portion (25) of the tool (16) inserted in the turret disk (15) and, if necessary, the coupling means, as the receiving portion of the first driving means (D1), can be controlled by means of a hydraulic or pneumatic activating means.

13. Turret unit according to any of the preceding claims,
wherein the first driving means (D1) could be cooled by an active and/or passive cooling means, and preferably coolant lines of which extend through the support of a housing, or coolant lines are placed outside of the housing.

14. Turret unit according to any of the preceding claims,
wherein a second driving means (11) is configured to rotate the turret disk (15) around the disk axis (26),
wherein the second driving means (11) is attached to a base of the turret head or the turret body (10) and the rotation axis of the second driving means (11) is preferably parallel and/or spaced apart from the disk axis (15).

15. Turret unit according to claim 14,
wherein a control system is configured to manage the engagement and disengagement of the first driving means (D1) with the tool (16),
when the first driving means (D1) is in a disengaged state with the tool (16) the second driving means (11) rotates the turret disk (15) to align a next tool (16) with the first driving means (D1), and the first driving means (D1) is configured to engage for driving the next tool for subsequent machining operation.

16. Machine tool, in particular lathe, comprising the turret unit according to at least one of claims 1 to 15.

17. The machine tool according to claim 16, wherein one or more or each carrier supports are configured to independently move the respective turret unit in one or more linear directions, including at least one of a H-axis movement direction for moving the turret unit horizontally in a direction in parallel to the spindle axis of the main spindle and an R-axis movement direction for moving the turret unit radially with respect to the spindle axis of the main spindle
